# EUROPEAN PATENT SPECIFICATION

(11) **EP 0 975 044 B1**
(45) Date of publication and mention of the grant of the patent: **26.03.2003**
(21) Application number: 99303486.7
(22) Date of filing: 04.05.1999
(51) Int. Cl.: H01Q 1/12, F16B 2/06

(54) **Device for fixing antennae**
Vorrichtung zur Befestigung einer Antenne
Dispositif de fixation d'antennes

(30) Priority: 29.05.1998 EP 98460018
(43) Date of publication of application: 26.01.2000
(73) Proprietor: TRT Lucent Technologies (SA), 92359 Le Plessis Robinson (FR)
(72) Inventor: Archer, Bernard, 91310 Linas (FR)
(74) Representative: Williams, David John

(56) References cited:
- FR-A- 2 227 776
- FR-A- 2 367 216
- US-A- 4 020 531

## Description

The present invention concerns the fixing of" aerial " equipment and more particularly the fixing of antennae.

Generally speaking, pylons or other basic supports intended to receive antennae comprise, either integrated or built into their structure, sectional steel sections on which antennae or their pole are anchored with the aid of an intermediate support element. These sectional steel sections are commonly known in the trade as "rafters" and this is the term to be subsequently denoted to designate them.

In practice, there are rafters with different types of sections varying as regards their shape and dimensions. For the most part, these are round bar sections or angle bar sections, but the angle bar may have a right or closed or open angle. And corresponding to each of the section shapes is a particular shape of said intermediate support element.

In his daily work, the operator laying antennae is therefore confronted with this problem of always having available a complete range of said intermediate support elements so as to be ale to use on site the one to correspond to the type of rafter used.

In order to resolve the solution to this problem, the invention offers a basic idea of designing a single intermediate support device able to be used on a plurality of rafters with different sections whilst ensuring effective and reliable anchoring.

It is known from US patent US 4020531 to provide an intermediate support device for anchoring on an angle bar rafter an item of equipment such as an antenna, and including a portion for fixing said equipment integral with portion for anchoring on said rafter.

The present invention is characterised over the disclosure of US 4020531 in that said anchoring portion comprises:
an anchoring base provided to be applied to the outside of a first wing of said rafter, said base having at one extremity a first element for hooking onto the free edge of said first wing,
at least one shank hook to ensure hooking onto the free edge of the second rafter wing each shank passing into a hole of said base at a distance from said first hooking element, and having its extremity portion threaded so as to receive a tightening nut, and
an interposition element provided to come between said tightening nut and said base so as to ensure an adequate bearing of said nut on said base said interposition element appearing in the form of a segment with a rounded section as regards its portion intended to come into contact against said base so as to permit a variable slanting of said hook shank transversally with respect to the rafter so as to obtain effective anchoring on any one of a plurality of angle bar rafters varying by virtue of their rectilinear angle and the dimensions of their section.

According to additional characteristics of the invention able to be provided alone or in combination:
- said first hooking element may consist of an end return of said base forming with it an acute rectilinear angle;
- the hook shank passage holes in said base can be elongated slits orientated in a direction corresponding to the transverse direction of the rafter;
- for each hook shank, a set of passage slits can be provided in said base and aligned in a direction corresponding to the transverse direction of the rafter;
- two shank hooks may be provided and intended to be spaced from each other in a direction corresponding to the length of the rafter, said interposition element then being advantageously a small bar common to the two shank hooks;
- U-shaped fastening elements can be provided and intended to traverse said base via their extremities so as to allow anchoring on round section rafters, in which case the passage holes in said base provided for the extremities of said fastening elements are advantageously combined with the hook shank passage holes ;
- said base advantageously comprises stiffening returns on two opposing sides whose direction corresponds to the transverse direction of the rafter.

These characteristics and advantages and others of the invention shall appear more clearly from a reading of the following description and attached drawings on which :
Figure 1 is a diagrammatic perspective view of a fixing device of the invention;
Figures 2 and 3 are perspective views of the device of figure 1 and mounted on standard angle bar rafters, respectively having a rectilinear angle of 90° and 60°, and
Figure 4 is a perspective view of the device of figure 1 and mounted on a rafter with a circular section.

In all the drawings, the same references have been used to denote throughout the document the same elements.

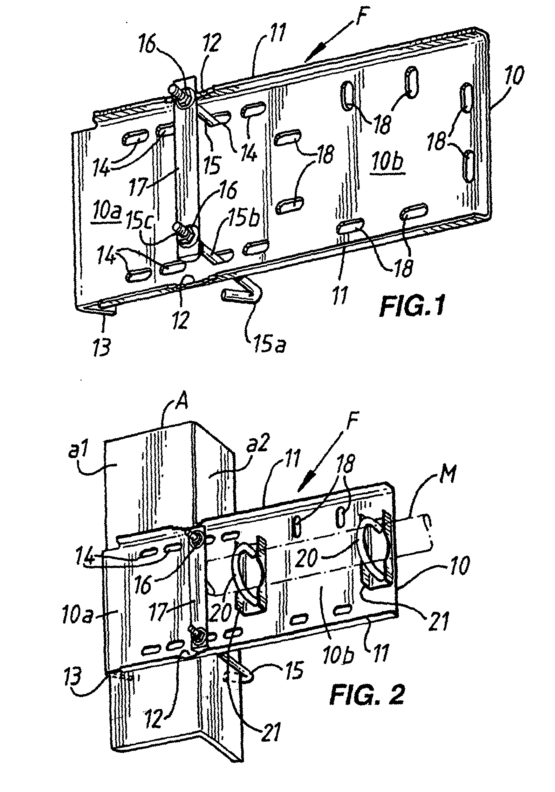

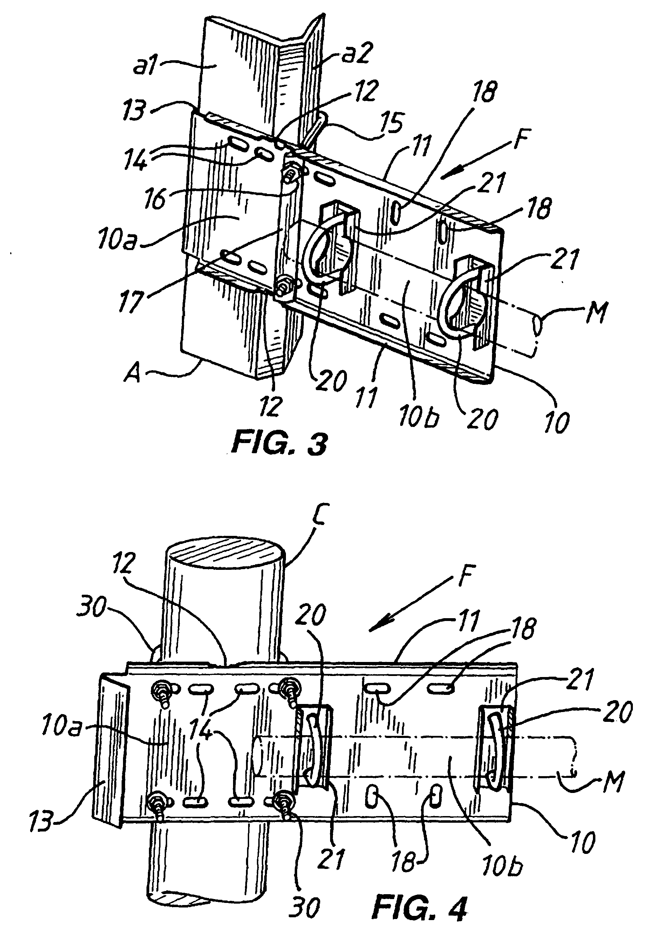

With reference firstly to figure 1, this figure represents the components of a fixing device F of the invention and able to be anchored with a given effectiveness to angle bars with various sections varying via the dimensions of their wings and their rectilinear angle. With reference to figure 4, it shall be subsequently seen that this device can be anchored on a round section rafter with two additional fasteners.

The device F includes a main element 10 consisting of a rectangular metallic plate having longitudinally a first zone 10a or anchoring base shown on the left of the drawing and extended by a second zone 10b shown on the right of the drawing and used to fix an antenna, generally by means of a mast. In the embodiment shown, there is no continuity solution between the zones 10a, 10b, but this could be possible in the same way as the two zones could be two separate elements rendered integral.

The plate 10 comprises on its two large sides stiffening returns 11 which have in the median portion of the anchoring base 10a opposite scallopings 12 preferably cut into steps. The returns 11 shall be orientated transversally with respect to a rafter, but subsequently the terms " transversally " and " longitudinally ", if not stated otherwise, are to be considered relatively to the plate 10.

The anchoring base 10a comprises along its free end side a fold or return 13 forming with it an acute rectilinear angle and which is orientated opposite the returns 11. The return 13 is used for hooking onto the free edge of a first angle bar rafter wing.

The anchoring base 10a further comprises close to and parallel to the returns 11 two rows of longitudinally elongated slits distributed on each side of the scallopings 12. The slits 14 in the two rows are two-by-two transversally opposite one another.

The zone 10b also comprises oblong slits 18 similar to the slits 14 and intended for fixing an antenna mast M, as shown on figures 2 to 4. The slits 18 are divided into two identical groups of four slits offset from one another by 90° so as to enable the antenna mast to be orientated horizontally or vertically. Each group comprises two distant pairs of slits 18 opposite one another, one being aligned transversally and the other longitudinally, the orientation of the slits 18 in a given group being offset by 90° from one pair to the other so as to permit a fine adjustment of the orientation of the mast M which is fixed as shown on figures 2 to 4 with the aid of U-shaped fasteners 20 and interposition cradles 21.

Apart from the element 10, the device F includes means to cooperate with the latter by hooking onto the free edge of the second angle bar wing of a rafter and by ensuring locking of the unit.

These means include two shanks 15 forming a hook via an end portion 15a bent into a pin and whose other end portion 15c situated beyond an intermediate rectilinear portion 15b is threaded so as to receive a nut 16 after passage in a slit 14 of the anchorage base 10a, as well as an interposition element 17 intended to ensure a correct bearing between the nuts 16 and the wall of the anchorage base 10a. To this effect, the interposition element 17 is a small bar having a rounded section in its portion coming opposite the anchorage base 10a. The two shank hooks 15 are passed into slits 14 opposite one anaother, as shown, the interposition element 17 consists of a half-round small bar common to the two shank hooks 15 and which thus fully cover the entire width of the element 10.

Figure 2 represents the device F anchored on a rafter A of right angle bar (rectilinear angle of 90°).

On mounting, the base 10a is applied to the wing a1 with its extremity return 13 passed onto the free edge thereof. The extremities 15c of the shank hooks 15 anchored to the free edge of the wing a2 are passed into the two most suitable slits 14 opposite one another, namely those for which the angle between the intermediate shank portion 15b and the anchorage base 10a shall be the closest, namely less than 90°. During tightening with the nuts 16, the small bar 17 shall also ensure an effective bearing support on the wall of the element 10, whether the shank hook 15 is fully orthogonal to the element 10 or is in a slanting position. It is proper to further note that most frequently said free edges of the angle bar wings are internally cut into a bevel so as to significantly improve catching of the hooks 13 and 15.

Figure 3 shows the same device F anchored onto a rafter A of closed angle bar (acute rectilinear angle of about 60°). Anchoring is effected at any point in the same way as in the preceding example. The shanks of the hooks 15 are here slanted on the base 10a by an angle equal at the most to 60° without the effectiveness of the bearing support of the interposition small bar 17 or accordingly without the solidity of fixing being diminished. It goes without saying that the same quality of anchoring would be obtained on a rafter of open angle bar (rectilinear angle of more than 90°).

Figure 4 shows the same device F anchored on a rafter C with a circular section. To this effect, it comprises two given fasteners 30 with the shape of a U and conforming to the diameter of the rafter. On mounting, the element 10 is first of all applied to the rafter so that the latter is engaged in the scallopings 12, then the fasteners 30 are placed, the extremities of each passing into the slits 14 of a given longitudinal row and receiving tightening nuts. It is to be noted that the cut into steps of the scallopings 12 provide excellent stability on fixing.

## Claims

1. Intermediate support device for anchoring on an angle bar rafter (A) an item of equipment, such as an antenna, and including a portion for fixing said equipment integral with a portion for anchoring on said rafter, **characterised in that** said anchoring portion comprises:
- an anchoring base (10a) provided to be applied to the outside of a first wing (a1) of said rafter (A), said base (10a) having at one extremity a first element for hooking onto the free edge of said first wing (a1),
- at least one shank hook (15) to ensure hooking onto the free edge of the second rafter wing (a2), each shank passing into a hole (14) of said base (10a) at a distance from said first hooking element and having its extremity portion threaded to receive a tightening nut (16), and
- an interposition element (17) provided to come between said tightening nut (16) and said base (10a) so as to ensure an adequate bearing of said nut (16) on said base (10a), said interposition element (17) appearing in the form of a segment with a rounded section as regards its portion intended to come into contact against said base (10a) so as to permit a variable slanting of said hook shank (15) transversally with respect to the rafter (A) so as to obtain an effective anchoring on any one of a plurality of angle bar rafters varying by virtue of their rectilinear angle and the dimensions of their section.

2. Device according to claim 1, **characterised in that** said first hooking element consists of an extremity return (13) of said base (10a) forming with the latter an acute rectilinear angle.

3. Device according to claim 1 or 2, **characterised in that** said holes (14) for the passage of hook shanks (15) into said base (10a) are elongated slits and orientated in a direction corresponding to the transverse direction of the rafter (A).

4. Device according to claim 3, **characterised in that** for each hook shank (15), a set of passage slits (14) is provided in the base (10a) and aligned in a direction corresponding to the transverse direction of the rafter (A).

5. Device according to claim 4, **characterised in that** it includes two shank hooks (15) intended to be spaced from each other in a direction corresponding to the length of the rafter (A).

6. Device according to claim 5, **characterised in that** said interposition element (17) is a small bar common to the two shank hooks (15).

7. Device according to any one of claims 1 to 6, **characterised in that** it further includes U-shaped fastening elements intended to traverse the base (10a) via their extremities so as to allow anchoring on round section rafters (C).

8. Device according to claim 7, **characterised in that** the passage holes in said base and provided for the extremities of said fasteners (30) are combined with the passage holes (14) of the hook shanks (15).

9. Device according to any one of claims 1 to 8, **characterised in that** said base (10a) comprises stiffening returns (11) on two opposing sides whose direction corresponds approximately to the transverse direction of the rafter (A).

10. Device according to claim 9, **characterised in that** in the median portion of the base (10a), the returns comprise scallopings (12) opposite one another and intended to receive a round section rafter (C).

11. Device according to claim 10, **characterised in that** said scallopings (12) are cut into steps.

12. Device according to any one of claims 1 to 11, **characterised in that** said base (10a) is a zone with a plate (10) extended by another zone (10b) of the latter constituting said portion for fixing said equipment, such as an antenna.

## Revendications

1. Dispositif de support intermédiaire pour ancrer sur une poutre en cornière (A) un article d'équipement , tel qu'une antenne, et comprenant une portion pour la fixation dudit équipement intégrée avec une portion pour l'ancrage sur ladite poutre, **caractérisé en ce que** ladite portion d'ancrage comprend :
- une base d'ancrage (10a) prévue pour être appliquée sur l'extérieur d'une première aile (a1) de ladite poutre (A), ladite base (10a) ayant à une extrémité un premier élément pour l'accrochage sur le bord libre de ladite première aile (a1),
- au moins un crochet à tige (15) pour assurer l'accrochage sur le bord libre de la seconde aile de la poutre (a2), chaque crochet à tige passant dans un trou (14) de ladite base (10a) à l'écart dudit premier élément d'accrochage et ayant sa portion d'extrémité filetée pour recevoir un écrou de serrage (16), et
- un élément d'interposition (17) prévu pour venir entre ledit écrou de serrage (16) et ladite base (10a) de façon à assurer une portée adéquate dudit écrou (16) sur ladite base (10a), ledit élément d'interposition (17) apparaissant sous la forme d'un segment avec une section arrondie en ce qui concerne sa portion prévue pour venir en contact contre ladite base (10a) de manière à permettre une inclinaison variable dudit crochet à tige (15) transversalement par rapport à la poutre (A) pour obtenir un ancrage efficace sur plusieurs sortes de poutres en cornière pouvant présenter des angles rectilignes et des sections différents.

2. Dispositif selon la revendication 1, **caractérisé en ce que** ledit premier élément d'accrochage consiste en un repli d'extrémité (13) de ladite base (10a) formant avec cette dernière un angle aigu rectiligne.

3. Dispositif selon la revendication 1 ou 2, **caractérisé en ce que** lesdits trous (14) pour le passage des crochets à tige (15) dans ladite base (10a) sont des trous allongés et orientés dans une direction correspondant à la direction transversale du chevron (A).

4. Dispositif selon la revendication 3, **caractérisé en ce que** pour chaque crochet à tige (15), un jeu d'encoches de passage (14) est prévu dans la base (10a) et aligné dans une direction correspondant à la direction transversale de la poutre (A).

5. Dispositif selon la revendication 4, **caractérisé en ce qu'**il inclut deux crochets à tige (15) prévu pour être espacés l'un de l'autre dans une direction correspondant à la direction longitudinale de la poutre (A).

6. Dispositif selon la revendication 5, **caractérisé en ce que** ledit élément d'interposition (17) est une petite barre commune aux deux crochets à tige (15).

7. Dispositif selon l'une quelconque des revendications 1 à 6, **caractérisé en ce qu'**il comprend en outre des éléments de fixation en étrier prévus pour traverser la base (10a) par leurs extrémités de façon à permettre l'ancrage sur des poutres de section ronde (C).

8. Dispositif selon la revendication 7, **caractérisé en ce que** les trous de passage pratiqués dans ladite base et prévus pour les extrémités desdites fixations (30) sont combinés aux trous de passage (14) des crochets à tige (15).

9. Dispositif selon l'une quelconque des revendications 1 à 8, **caractérisé en ce que** ladite base (10a) comprend des replis raidisseurs (11) sur deux côtés opposés dont la direction correspond approximativement à la direction transversale de la poutre (A).

10. Dispositif selon la revendication 9, **caractérisé en ce que** dans la portion médiane de la base (10a), les replis comportent des échancrures (12) opposées l'une à l'autre et prévues pour recevoir une poutre de section ronde (C).

11. Dispositif selon la revendication 10, **caractérisé en ce que** les échancrures (12) sont taillées en gradins.

12. Dispositif selon l'une quelconque des revendications 1 à 11, **caractérisé en ce que** ladite base (10a) est une zone avec une plaque (10) prolongée par une autre zone (10b) de cette dernière constituant ladite portion pour la fixation dudit équipement, tel qu'une antenne.

## Patentansprüche

1. Zwischenstützvorrichtung zur Verankerung eines Ausrüstungsteils, beispielsweise einer Antenne, an einer Winkelstangenhalterung (A), wobei die Stützvorrichtung einen Abschnitt zur integralen Befestigung der Ausrüstung mit einem Abschnitt zur Verankerung an der Halterung beinhaltet, **dadurch gekennzeichnet, daß** der Verankerungsabschnitt folgendes umfaßt:
- eine Verankerungsgrundplatte (10a), die vorgesehen ist, um an der Außenseite eines ersten Schenkels (a1) der Halterung (A) angebracht zu werden, wobei die Grundplatte (10a) an einem Ende ein erstes Element zum Einhaken an der freien Kante des ersten Schenkels (a1) besitzt;
- mindestens einen Schafthaken (15), um ein Einhaken an der freien Kante des zweiten Halterungsschenkels (a2) sicherzustellen, wobei jeder Schaft in einem Abstand zum ersten Hakenelement in ein Loch (14) der Grundplatte (10a) eingeführt und sein Endabschnitt mit Gewinde zur Aufnahme einer Befestigungsmutter (16) ausgestattet ist; und
- ein Zwischenelement (17), das vorgesehen ist, um zwischen der Befestigungsmutter (16) und der Grundplatte (10a) eingesetzt zu werden, um eine adäquate Auflage der Mutter (16) an der Grundplatte (10a) sicherzustellen, wobei das Zwischenelement (17) in Form eines Segments vorgesehen ist, das in seinem Abschnitt, der dazu vorgesehen ist, mit der Grundplatte (10a) in Kontakt zu kommen, einen abgerundeten Querschnitt aufweist, um eine variable Schrägstellung des Hakenschafts (15) quer zur Halterung (A) zuzulassen, so daß eine wirksame Verankerung an einer beliebigen von mehreren Winkelstangenhalterungen ermöglicht wird, die aufgrund ihres geradlinigen Winkels und der Abmessungen ihres Querschnitts variieren.

2. Vorrichtung nach Anspruch 1, **dadurch gekennzeichnet, daß** das erste Hakenelement aus einem Endrücksprung (13) der Grundplatte (10a) besteht, der mit der letzteren einen spitzen geradlinigen Winkel bildet.

3. Vorrichtung nach Anspruch 1 oder 2, **dadurch gekennzeichnet, daß** es sich bei den Löchern (14) zum Einführen der Hakenschafte (15) in die Grundplatte (10a) um längliche Schlitze handelt, die in einer Richtung entsprechend der Querrichtung der Halterung (A) orientiert sind.

4. Vorrichtung nach Anspruch 3, **dadurch gekennzeichnet, daß** für jeden Hakenschaft (15) ein Satz Einführungsschlitze (14) in der Grundplatte (10a) vorgesehen ist, die in einer Richtung entsprechend der Querrichtung der Halterung (A) ausgerichtet sind.

5. Vorrichtung nach Anspruch 4, **dadurch gekennzeichnet, daß** sie zwei Schafthaken (15) beinhaltet, die in einer der Länge der Halterung (A) entsprechenden Richtung mit Abstand zueinander vorgesehen sind.

6. Vorrichtung nach Anspruch 5, **dadurch gekennzeichnet, daß** es sich bei dem Zwischenelement (17) um eine gemeinsam für die zwei Schafthaken (15) vorgesehene kleine Stange handelt.

7. Vorrichtung nach einem der Ansprüche 1 bis 6, **dadurch gekennzeichnet, daß** sie weiterhin U-förmige Befestigungselemente beinhaltet, die mit ihren Enden quer zur Grundplatte (10a) verlaufend vorgesehen sind, um eine Verankerung an Halterungen (C) mit rundem Querschnitt zu ermöglichen.

8. Vorrichtung nach Anspruch 7, **dadurch gekennzeichnet, daß** die für die Enden der Befestiger (30) vorgesehenen Einführungslöcher in der Grundplatte mit den Einführungslöchern (14) der Hakenschafte (15) kombiniert sind.

9. Vorrichtung nach einem der Ansprüche 1 bis 8, **dadurch gekennzeichnet, daß** die Grundplatte (10a) Versteifungsrücksprünge (11) auf zwei gegenüberliegenden Seiten umfaßt, deren Richtung in etwa der Querrichtung der Halterung (A) entspricht.

10. Vorrichtung nach Anspruch 9, **dadurch gekennzeichnet, daß** im mittleren Abschnitt der Grundplatte (10a) die Rücksprünge einander gegenüberliegende bogenförmige Ausschnitte (12) umfassen, die vorgesehen sind, um eine Halterung (C) mit rundem Querschnitt aufzunehmen.

11. Vorrichtung nach Anspruch 10, **dadurch gekennzeichnet, daß** die bogenförmigen Ausschnitte (12) stufenweise ausgeschnitten sind.

12. Vorrichtung nach einem der Ansprüche 1 bis 11, **dadurch gekennzeichnet, daß** es sich bei der Grundplatte (10a) um einen Bereich mit einer Platte (10) handelt, die durch einen anderen Bereich (10b) der letzteren erweitert ist, um den Abschnitt zur Befestigung der Ausrüstung, beispielsweise einer Antenne, zu bilden.
